# FASCICULE DE BREVET EUROPEEN

(11) **EP 2 510 410 B1**
(45) Date de publication et mention de la délivrance du brevet: **25.02.2015**
(21) Numéro de dépôt: 10794877.0
(22) Date de dépôt: 08.12.2010
(51) Int. Cl.: G05B 19/401

(54) **PROCEDE POUR OPTIMISER LES CONDITIONS DE TRAVAIL D'UN OUTIL COUPANT**
VERFAHREN ZUR OPTIMIERUNG DER ARBEITSBEDINGUNGEN EINES SCHNEIDWERKZEUGS
METHOD FOR OPTIMIZING THE WORKING CONDITIONS OF A CUTTING TOOL

(30) Priorité: 08.12.2009 FR 0905926
(43) Date de publication de la demande: 17.10.2012
(73) Titulaire: Arts., 75013 Paris (FR)
(72) Inventeur: FROMENTIN, Guillaume, 71460 Saint Genoux Le National (FR)
(74) Mandataire: Beaudouin-Lafon, Emmanuel
(86) Numéro de dépôt international: PCT/EP2010/007466
(87) Numéro de publication internationale: WO 2011/069646

(56) Documents cités:
- US-A1- 2007 046 238
- VAEZ-ZADEH S ET AL: "A continuous efficiency optimization controller for induction motor drives", ENERGY CONVERSION AND MANAGEMENT, vol. 46, no. 5, 1 mars 2005 (2005-03-01), pages 701-713, XP004678770, ELSEVIER SCIENCE PUBLISHERS, OXFORD, GB ISSN: 0196-8904, DOI: 10.1016/J.ENCONMAN.2004.05.006
- JANTUNEN E: "A summary of methods applied to tool condition monitoring in drilling", INTERNATIONAL JOURNAL OF MACHINE TOOLS AND MANUFACTURE, vol. 42, no. 9, juillet 2002 (2002-07), pages 997-1010, XP002603953, ELSEVIER LTD GB DOI: 10.1016/S0890-6955(02)00040-8
- LI X: "Development of Current Sensor for Cutting Force Measurement in Turning", IEEE TRANSACTIONS ON INSTRUMENTATION AND MEASUREMENT, vol. 54, no. 1, 1 février 2005 (2005-02-01), pages 289-296, XP011125265, IEEE SERVICE CENTER, PISCATAWAY, NJ,US ISSN: 0018-9456, DOI: 10.1109/TIM.2004.840225
- GERALD B KLIMAN ET AL: "Sensorless, Online Motor Diagnostics", IEEE COMPUTER APPLICATIONS IN POWER, vol. 10, no. 2, 1 avril 1997 (1997-04-01), pages 39-43, XP011083119, IEEE INC. NEW YORK, US ISSN: 0895-0156

## Description

La présente invention concerne un procédé pour optimiser les conditions de travail d'un outil de coupe dans le façonnage des pièces par enlèvement de copeaux, principalement tournage, fraisage et perçage.

### ARRIERE PLAN DE L'INVENTION

L'objectif de la norme NF E66-520 est de définir une méthode dénommée Couple Outil Matière (COM) destinée à déterminer les conditions de travail d'un outil coupant de façon à en déduire une plage optimale d'utilisation en production. En effet, comme rappelé en introduction de cette norme : « Il faut de nos jours faire bon du premier coup tout en améliorant et en prédimensionnant le système de production. »

Suivre la méthode préconisée par cette norme est une pratique devenue assez répandue de nos jours. De manière très schématique, on rappellera que la norme prévoit de procéder à des essais, après avoir défini un point de fonctionnement stable de l'outil et de la machine (point de qualification), en faisant varier indépendamment l'un de l'autre, autour de ce point de fonctionnement, au moins deux paramètres qui seront par exemple la vitesse de coupe Vc et l'avance f de l'outil. Les relevés faits au cours de ces essais permettent de déterminer la variation de l'énergie consommée par l'opération d'usinage en fonction de la variable Vc et f, énergie qui se nomme énergie ou effort spécifique de coupe Kc (pour le cas du tournage). Les valeurs minimales de cette énergie permettent de déterminer une plage entre des valeurs maximales et minimales des paramètres Vc et f, plages à l'intérieur desquelles l'opération d'usinage est optimisée. Il est possible d'affiner ces opérations selon la norme en opérant diverses corrélations des données optimales avec d'autres critères comme le contrôle des copeaux produits et l'état de surface obtenu.

La méthodologie normative exige la réalisation de nombreux essais pour que les résultats aient une valeur statistique dans la réalisation des courbes (ou bases de données) qui serviront au choix des conditions opératoires optimales de l'outil. La mise en oeuvre de ces essais présente deux inconvénients : l'obligation d'instrumenter la machine et l'outil que l'on souhaite « prédimensionner » en vue d'une production de série et la dépense de temps nécessaire à la réalisation des essais de détermination du fonctionnement optimal.

Il existe donc un besoin de simplifier la méthodologie COM en supprimant l'instrumentation d'une machine et en gagnant du temps dans le relevé des paramètres utiles à cette méthodologie.

### OBJET DE L'INVENTION

C'est ainsi que l'invention a pour objet un procédé d'acquisition des paramètres optimisés d'une opération d'usinage au moyen d'une machine à commande numérique par enlèvement de matière sur une pièce grâce à un outil coupant, la machine étant pourvue d'une broche motorisée pour l'entraînement soit de la pièce (tournage) soit de l'outil (fraisage ou perçage), en application de la méthodologie COM :
- selon lequel on procède à une pluralité de relevés d'une donnée représentative de l'énergie spécifique (Kc) de coupe au cours d'une même pluralité d'essais réalisés avec une valeur imposée, différente d'un essai à l'autre d'au moins une variable significative des opérations de coupe,
- dans lequel l'une des variables en question est la vitesse de coupe (Vc) et une autre de ces variables est la vitesse d'avance (f),
- selon lequel ensuite on détermine, par un traitement conforme à la norme des variables imposées et des données relevées, une plage de valeurs de chacune de ces variables dans laquelle sera logée la valeur optimale de cette variable obtenue par le traitement des résultats pour la réalisation de l'opération d'usinage,
caractérisé en ce que, pour chaque variable, les valeurs imposées et leur évolution résultent d'un programme spécifique (10a) de la commande numérique (7) imposant une variation continue desdites valeurs de la variable au cours d'une seule passe d'usinage à titre d'essai et en ce que les données relevées sont constituées au cours de cette passe unique, par les différentes valeurs prises par le courant de couple (Iq) du moteur de la broche de la machine desquelles on tire par un traitement de calcul les valeurs correspondantes de (Kc).

L'un des avantages importants de l'invention réside dans le fait que le Couple Outil Matière d'une opération d'usinage par enlèvement de copeaux est obtenu directement sur la machine de production. Il n'est plus besoin d'instrumenter une telle machine et de l'immobiliser pour l'exécution de la série d'essais imposés par la norme. Le gain de temps est alors considérable et s'accompagne de l'économie d'un matériel coûteux qui n'est souvent pas adapté à un usage en atelier - d'où la nécessité d'une construction dans un espace protégé d'une machine instrumentée dédiée aux essais, ce qui n'est pas négligeable en terme d'investissement - et d'une réduction du nombre des pièces d'essai impropres à leur commercialisation, ce qui peut être d'un impact non négligeable sur des fabrications en petite série.

L'invention se traduit par une programmation particulière introduite dans la commande numérique de la machine qui permet d'une part, de faire varier continument les variables Vc et f et, d'autre part, de traiter les données par le calcul en fonction de formules connues pour en déduire les valeurs utiles au COM et par une interface homme machine qui autorise l'affichage (graphique par exemple) des résultats utiles au réglage de la machine après les deux passes d'essai pour lancer la production de série.

Par ailleurs, au cours d'un cycle de fabrication, il peut être possible de procéder, grâce à la programmation appropriée selon l'invention de la commande numérique de la machine, à l'extraction des valeurs imposées et acquises qui caractérise une passe d'usinage en cours de production.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés parmi lesquels par un :

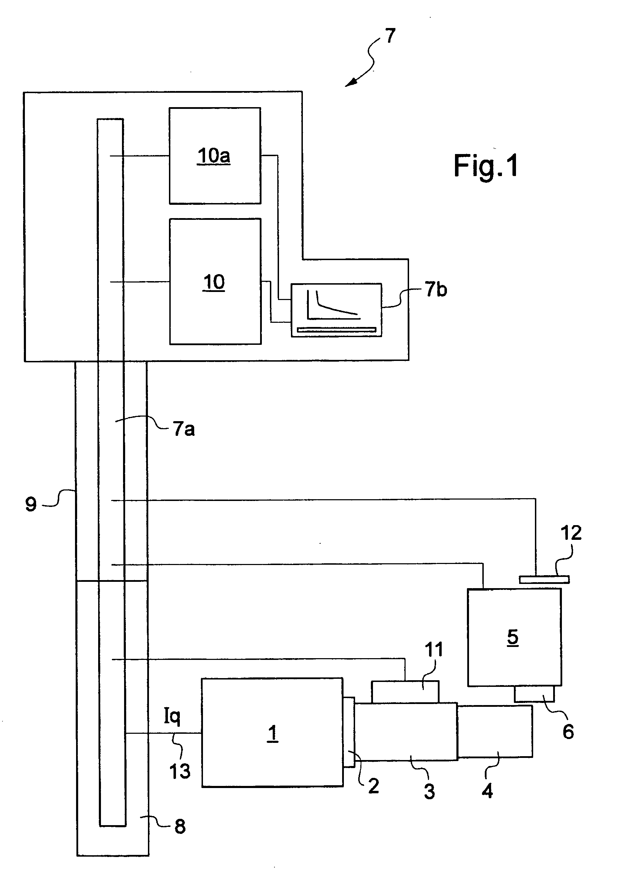

- la figure 1 illustre par un schéma une machine de tournage dans laquelle est implémenté le procédé de l'invention,

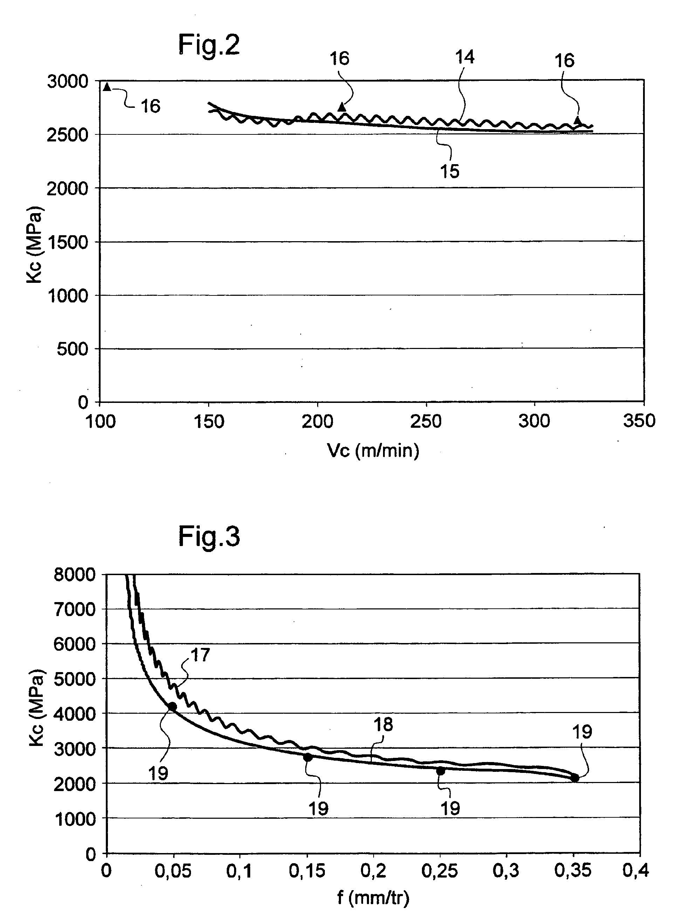

- les figures 1 et 2 illustrent, par des graphes de l'énergie spécifique de coupe en fonction des variables vitesse de coupe (Vc) et avance (f), la validation des données obtenues par l'invention en comparaison des données obtenues par des méthodes connues

### DESCRIPTION DETAILLEE DE L'INVENTION

Le schéma de la figure 1 est celui d'une machine à commande numérique destinée à des opérations de tournage. A cet effet, un moto-réducteur 1 est accouplé par une transmission 2 à une broche 3 qui entraîne en rotation des pièces à usiner 4. Par ailleurs, la machine comporte un chariot 5, déplaçable par un moteur le long d'une direction sensiblement parallèle à l'axe de la pièce à tourner, ce chariot portant un outil 6 coupant d'usinage de la pièce 4.

La commande numérique 7 est une unité informatique programmable qui agit sur un variateur 8 de l'alimentation du motoréducteur et sur un variateur 9 du moteur d'entraînement du chariot 5 ce, en fonction d'un logiciel ou programme d'usinage 10. Un bus 7a de communication relie les variateurs à la commande numérique et celle-ci à des capteurs 11 (codeur) de la rotation de la broche, 12 du déplacement du chariot. Le variateur 8 calcule chaque instant la valeur du courant de couple (Iq) des moteurs de broche et permet à chaque instant à la commande numérique de connaître cette valeur.

Selon l'invention, la commande numérique possède un logiciel complémentaire 10a qui permet de programmer l'exécution d'une passe d'usinage au cours de laquelle les paramètres d'essai variables que sont ceux édictés par la norme COM, c'est-à-dire principalement la vitesse de coupe (Vc) et l'avance (f), prennent des valeurs variables en continu. Ce logiciel peut également comporter la possibilité de programmer des passes d'usinage préalables aux passes d'essai pour, par exemple, déterminer un point de qualification au sens de la norme.

L'exécution du programme d'essai comprendra une première passe d'usinage durant laquelle on fait varier la vitesse de coupe (Vc) par exemple de 120 à 380 mètres par minute alors que l'avance (f) est fixe, par exemple à la valeur de qualification. On relève et enregistre en continu le courant de couple (Iq) délivré par le variateur 8 du moteur 1 à la commande numérique.

A partir de cette donnée, le programme d'essai est à même d'élaborer l'énergie spécifique (Kc) correspondant à chaque valeur de (Vc).

Il en résulte une courbe telle que celle 14 de la figure 2, celle-ci ayant été filtrée. On constate que cette courbe est tout à fait corrélée avec et la courbe 15,obtenue avec un dynamomètre piézo-électrique ,de mesure de (Kc) et les mesures discrètes 16 issues de la méthode classique utilisant également un dynamomètre piézo-électrique. Dans cette plage de valeur, il sera alors possible de déterminer la vitesse de coupe (Vc) la plus appropriée à une valeur minimale de (Kc) donc d'optimiser l'usinage par rapport à ce premier critère qu'est la vitesse de coupe (Vc).

La deuxième passe d'usinage d'essai consiste à faire varier l'avance (f) dans une plage déterminée par exemple entre, dans le cas d'un tournage, quelques centièmes de millimètres et 3,5 dixièmes de millimètres par tour. Le relevé et l'enregistrement du courant de couple (Iq) permet d'obtenir la courbe 17 de la figure 3, la valeur de (Kc) ayant résulté d'un traitement de(Iq).

On constate, comme précédemment, que cette courbe est significative de la variation de la valeur recherchée puisqu'elle passe à proximité des points relevés par d'autres moyens de mesure classiques (un dynamomètre piézo-électrique) tels que les points 18 ou est très proche de la courbe 19 qui sont l'enregistrement continu des résultats d'essais réalisés avec ces moyens classiques. Le choix de la valeur de l'avance pour une exécution optimisée de l'usinage est ainsi immédiat.

On comprend que l'invention, en faisant varier de manière continue un paramètre de coupe au cours d'une passe unique d'usinage, permet d'acquérir les données nécessaires à l'application de la norme COM tout en étant dispensé d'instrumenter une machine à cet effet et de procéder à des essais nombreux.

La pertinence de cette solution logicielle est grande car elle peut être installée sur chaque machine de production et fonctionner dans une ambiance d'atelier habituellement peu propice à l'exécution de mesures précises.

La machine ou son unité de commande numérique comporte de manière connue une interface homme machine tel qu'un écran d'affichage 7b. Cette interface constitue le moyen de visualiser soit numériquement soit graphiquement la valeur à choisir pour optimiser l'opération d'usinage. Cette interface peut également comporter un moyen d'accès pour l'opérateur afin de valider une valeur proposée par la machine ou d'entrer une valeur de son choix, qu'il aura considérée comme plus pertinente.

## Revendications

1. Procédé d'acquisition des paramètres optimisés d'une opération d'usinage au moyen d'une machine à commande numérique par enlèvement de matière sur une pièce (4) grâce à un outil coupant (6), la machine étant pourvue d'une broche motorisée (3) pour l'entraînement soit de la pièce (4) soit de l'outil (6), en application de la méthodologie COM :
- selon lequel on procède à une pluralité de relevés d'une donnée représentative de l'énergie spécifique de coupe (Kc) au cours d'une même pluralité d'essais réalisés avec une valeur imposée, différente d'un essai à l'autre, d'au moins une variable significative des opérations de coupe,
- dans lequel l'une des variables en question est la vitesse de coupe (Vc) et une autre de ces variables est la vitesse d'avance (f),
- selon lequel ensuite on détermine, par un traitement conforme à la norme des variables imposées et des données relevées, une plage de valeurs de chacune de ces variables dans laquelle sera logée la valeur optimale de cette variable obtenue par le traitement des résultats pour la réalisation de l'opération d'usinage,
**caractérisé en ce que** pour chaque variable, les valeurs imposées et leur évolution résultent d'un programme spécifique (10a) de la commande numérique (7) imposant une variation continue desdites valeurs de la variable au cours d'une seule passe d'usinage à titre d'essai et **en ce que** les données relevées sont constituées au cours de cette passe unique, par les différentes valeurs prises par le courant de couple (Iq) du moteur de la broche de la machine desquelles on tire par un traitement de calcul les valeurs correspondantes de l'énergie spécifique de coupe (Kc).

2. Machine à commande numérique pour mettre en oeuvre le procédé selon la revendication 1, **caractérisée en ce que** la commande numérique (7) comporte un logiciel spécifique (10) (10a) de détermination, au moyen du courant de couple (Iq) de la broche, des valeurs optimales de l'avance et de la vitesse de coupe de l'outil.

3. Machine selon la revendication 2, dans laquelle la commande numérique possède une interface (7b) homme machine, **caractérisée en ce que** cette interface constitue le moyen d'affichage et d'entrée des valeurs optimisées de la vitesse de coupe et de l'avance à choisir pour l'opération d'usinage programmée.

## Patentansprüche

1. Verfahren zur Erfassung optimierter Parameter eines Bearbeitungsvorgangs mit Hilfe einer Maschine mit numerischer Steuerung durch Werkstoffabtrag an einem Werkstück (4) mittels eines Schneidwerkzeugs (6), wobei die Maschine mit einer motorisierten Spindel (3) zum Antrieb entweder des Werkstücks (4) oder des Werkzeugs (6) ausgestattet ist, unter Anwendung der COM-Methodik:
- gemäß dem man eine Vielzahl von Erhebungen eines für die spezifische Schnittenergie (Kc) repräsentativen Datenelements während einer selben Vielzahl von Versuchen durchführt, die mit einem von Versuch zu Versuch unterschiedlichen vorgegebenen Wert für mindestens eine für Schneidvorgänge bezeichnende Variable durchgeführt werden,
- bei dem eine der betreffenden Variablen die Schnittgeschwindigkeit (Vc) und eine andere dieser Variablen die Vorschubgeschwindigkeit (f) ist,
- gemäß dem man anschließen durch eine normengerechte Verarbeitung von vorgegebenen Variablen und von erhobenen Daten einen Wertebereich für jede dieser Variablen bestimmt, in dem sich der optimale Wert dieser Variablen, der durch die Verarbeitung der Ergebnisse erhalten wird, für die Umsetzung des Bearbeitungsvorgangs befinden wird,
**dadurch gekennzeichnet, dass** für jede Variable die vorgegebenen Werte und deren Veränderung aus einem spezifischen Programm (10a) der numerischen Steuerung (7) resultieren, das eine kontinuierliche Variation dieser genannten Werte der Variable während eines einzigen Bearbeitungsdurchlaufs als Versuch erfordert, und dadurch, dass die erhobenen Daten während dieses einzigen Durchlaufs durch die unterschiedlichen Werte gebildet werden, die von dem Drehmomentstrom (Iq) des Motors der Spindel der Maschine angenommen werden, von denen man durch eine Rechenverarbeitung die entsprechenden Werte der spezifischen Schnittenergie (Kc) herleitet.

2. Maschine mit numerischer Steuerung zum Durchführen des Verfahrens nach Anspruch 1, **dadurch gekennzeichnet, dass** die numerische Steuerung (7) eine spezifische Software (10), (10a) zur Bestimmung der optimalen Werte für den Vorschub und die Schnittgeschwindigkeit des Werkzeugs anhang des Drehmomentstroms (Iq) der Spindel umfasst.

3. Maschine nach Anspruch 2, wobei die numerische Steuerung eine Mensch-Maschine-Schnittstelle (7b) umfasst, **dadurch gekennzeichnet, dass** diese Schnittstelle das Mittel zum Anzeigen und Eingeben von optimierten Werten der Schnittgeschwindigkeit und des Vorschubs darstellt, die für den programmierten Bearbeitungsvorgang auszuwählen sind.

## Claims

1. A method for acquiring the optimized parameters of a machining operation by means of a numerically-controlled machine by the removal of material on a part (4) using a cutting tool (6), the machine being provided with a motor-driven spindle (3) for driving either the part (4) or the tool (6), in application of the COM methodology:
- whereby a plurality of readings of a datum representative of the specific cutting energy (Kc) are taken during an equal plurality of tests carried out with an imposed value, different from one test to another, of at least one significant variable of the cutting operations,
- in which one of the variables concerned is the cutting speed (Vc) and another of these variables is the rate of advance (f),
- whereby there is then determined, by processing conforming to the norm of the imposed variables and of the recorded data, a range of values of each of these variables which will contain the optimum value of this variable obtained by processing of the results for carrying out the machining operation,
**characterized in that**, for each variable, the imposed values and their trend result from a specific program (10a) of the numerical control (7) imposing a continuous variation of said values of the variable during a single machining pass as a test and **in that** the recorded data are compiled during this single pass, from the different values taken by the torque current (Iq) of the motor of the spindle of the machine from which the corresponding values of the specific cutting energy (Kc) are determined by computational processing.

2. A numerically-controlled machine for implementing the method as claimed in claim 1, **characterized in that** the numerical control (7) comprises specific software (10) (10a) for determining, by means of the torque current (Iq) of the spindle, the optimum values of the advance and of the cutting speed of the tool.

3. The machine as claimed in claim 2, in which the numerical control has a human-machine interface (7b), **characterized in that** this interface constitutes the means for displaying and inputting the optimized values of the cutting speed and of the advance to be chosen for the programmed machining operation.
